# EUROPEAN PATENT APPLICATION

(11) **EP 4 324 729 A1**
(43) Date of publication of application: **21.02.2024**
(21) Application number: 23175998.6
(22) Date of filing: 30.05.2023
(51) Int. Cl.: B62J 6/023, B60Q 1/115, B60Q 1/18, F21S 41/663

(54) **SCOOTER TYPE VEHICLE**

(30) Priority: 19.08.2022 JP 2022131209
(71) Applicant: Yamaha Hatsudoki Kabushiki Kaisha, Iwata-shi, Shizuoka 438-8501 (JP)
(72) Inventor: HSIEH, CHIN-YU, 320 Taoyuan City (TW); CHEN, YEN-FU, 320 Taoyuan City (TW); HSU, FANG-YU, 320 Taoyuan City (TW)
(74) Representative: Studio Torta S.p.A.

(57) **Abstract**

There is described a scooter type vehicle (1) including a front cover (21), a light unit (40), and a controller (92); the light unit (40) being disposed on the front cover (21); the light unit (40) including a left cornering light (48) and a right cornering light (49); the controller (92) controls the light quantities of the left and right cornering lights (48, 49) according to the left and right lean angles of the scooter type vehicle (1); the entire left and right cornering lights (48, 49) being disposed below the center of the front cover (21) in the vehicle vertical direction as seen from the vehicle front view; as seen from the vehicle front view, the left and right cornering lights (48, 49) are entirely disposed between the outer edge of the left suspension (18) and the outer edge of the right suspension (19) in the vehicle width direction.

## Description

### TECHNICAL FIELD

The present invention relates to a scooter type vehicle.

### BACKGROUND

Some straddled vehicles are provided with cornering lights for illuminating the turning direction of the vehicle. For example, Japanese Patent Application Publication No. 2013-248990 (hereinafter D1) discloses a cornering light mounted on a large sports model motorcycle. The cornering light is switched between on and off according to the lean angle of the vehicle. The cornering light is disposed on the left and right rearview mirrors respectively.

D1 describes that, in a case that the cornering light is disposed at a low position, the distance between the cornering light and the ground is short when the motorcycle is turning, so the change in the illumination range with respect to the change in the lean angle increases. In addition, D1 describes as a problem that the rider feels a sense of incongruity due to the large change in the illumination range. D1 describes that the cornering light of the straddled vehicle disclosed in D1 illuminates from a high position, thereby it is suppressed the change in the illumination range with respect to the change in the lean angle.

On the other hand, Japanese Patent Application Publication No. 2013-230772 (hereinafter D2) discloses left and right cornering lights mounted on a scooter type vehicle. The left and right cornering lights are disposed at the bottom of the front cover. Each of the left and right cornering lights has three light sources. The three light sources are arranged in the vehicle width direction. Therefore, the left and right cornering lights are enlarged in the vehicle width direction. As the lean angle increases, the inner light source and the outer light source are sequentially turned on.

In the vehicle disclosed in D2, unlike the vehicle disclosed in D1, the cornering lights are disposed at a low position. However, in the vehicle disclosed in D2, a plurality of light sources are sequentially turned on according to the lean angle in the cornering lights that are enlarged in the vehicle width direction. This suppresses the decrease in the illumination range with respect to the change in the lean angle.

### SUMMARY

In the vehicle disclosed in D1, the cornering lights are disposed at a high position. D1 describes that this provides a large distance between the cornering light and the ground when the motorcycle is turning, thereby the change in the illumination range with respect to the change in the lean angle is suppressed. However, the inventors of the present invention have found that in a case that the cornering light is disposed at a high position, the change in the position of the cornering light increases with the change in the lean angle. The inventors also noticed that not only the smaller distance between the cornering light and the ground when the vehicle is turning, but also the greater change in the position of the cornering light causes the greater change in the illumination range..

Then, the inventors conceived that the change in the position of the cornering light when the vehicle is leaned is suppressed by arranging the cornering light at a low position. The inventors conceived that by suppressing the change in the position of the cornering light when the vehicle is leaned, it is possible to suppress the change in the illumination range with respect to the change in the lean angle.

On the other hand, in the vehicle disclosed in D2, the cornering lights that are enlarged to the vehicle width direction suppress the decrease in the illumination range with respect to the change in the lean angle. However, in this case, the large cornering lights increase the size of the front portion of the vehicle.

It is an object of the present invention to suppress a change in an illumination range of a cornering light in a scooter type vehicle to reduce a rider's discomfort and miniaturize a front portion of the vehicle.

A scooter type vehicle according to one aspect of the present invention includes a head pipe, a steering device, a front cover, a light unit, and a controller. The steering device is rotatably supported by the head pipe. The front cover is disposed in front of the head pipe and is opaque. The light unit is disposed on the front cover. The light unit includes a left cornering light and a right cornering light. The left cornering light illuminates a left front ground when the scooter type vehicle turns left. The right cornering light illuminates a right front ground when the scooter type vehicle turns right. The controller controls light quantities of the left cornering light and the right cornering light.

The steering device includes a handle member, a steering shaft, a bracket, a left suspension, a right suspension, and a front wheel. The handle member is operable by a rider. The steering shaft is connected to the handle member and inserted into the head pipe. The bracket is connected to the steering shaft and extends in a vehicle width direction. The left suspension is connected to the bracket and extends downward from the bracket. The right suspension is connected to the bracket and extends downward from the bracket. The front wheel is rotatably supported by the left suspension and the right suspension.

The controller controls the light quantity of the left cornering light according to a leftward lean angle of the scooter type vehicle. The controller controls the light quantity of the right cornering light according to a rightward lean angle of the scooter type vehicle. The entire left cornering light and right cornering light are disposed below a center of the front cover in a vehicle vertical direction as seen from a vehicle front view. As seen from the vehicle front view, the entire left cornering light is disposed between an outer edge of the left suspension and an outer edge of the right suspension in the vehicle width direction. As seen from the vehicle front view, the entire right cornering light is disposed between the outer edge of the left suspension and the outer edge of the right suspension in the vehicle width direction.

In the scooter type vehicle according to the present invention, the entire left and right cornering lights are disposed at low positions on the front cover. This reduces the change in the position of the left and right cornering lights according to the lean angle, thereby the change in the illumination range is suppressed. As seen from the vehicle front view, the left and right cornering lights are entirely disposed between the outer edge of the left suspension and the outer edge of the right suspension in the vehicle width direction. Therefore, the left and right cornering lights are disposed compactly in the center of the front cover. This provides a large distance between the ground and the left and right cornering lights when the vehicle is leaning. Therefore, even if the left and right cornering lights are disposed at low positions, the change in the illumination range is suppressed. In addition, the left and right cornering lights are compactly disposed in the center of the front cover. Therefore, the front portion of the scooter type vehicle is downsized.

The front cover may include a first inclined surface. The first inclined surface may be inclined upward and rearward as seen from a vehicle side view. The left cornering light and the right cornering light may be disposed below the first inclined surface as seen from the vehicle side view. In this case, since the left cornering light and the right cornering light are disposed at low positions, the movement of the left cornering light and the right cornering light in the vehicle width direction and the vehicle vertical direction when the vehicle is leaning becomes small. This suppresses the change in the illumination range with respect to the change in the lean angle.

The front cover may include a second inclined surface. The second inclined surface may be disposed below the first inclined surface as seen from the vehicle side view. The second inclined surface may be inclined downward and rearward as seen from the vehicle side view. The left cornering light and the right cornering light may be disposed below the second inclined surface as seen from the vehicle side view. In this case, since the left cornering light and the right cornering light are disposed at low positions, the movement of the left cornering light and the right cornering light in the vehicle width direction and the vehicle vertical direction when the vehicle is leaning becomes small. This suppresses the change in the illumination range with respect to the change in the lean angle.

The scooter type vehicle may further include a seat disposed behind the head pipe. The left cornering light and the right cornering light may be disposed below an upper surface of the seat as seen from the vehicle side view. In this case, since the left cornering light and the right cornering light are disposed at low positions, the movement of the left cornering light and the right cornering light in the vehicle width direction and the vehicle vertical direction when the vehicle is leaning becomes small. This suppresses the change in the illumination range with respect to the change in the lean angle.

As seen from the vehicle front view, the entire left cornering light may be disposed between an inner edge of the left suspension and an inner edge of the right suspension in the vehicle width direction. As seen from the vehicle front view, the entire right cornering light may be disposed between the inner edge of the left suspension and the inner edge of the right suspension in the vehicle width direction. In this case, the left and right cornering lights are disposed more compactly in the vehicle width direction. As a result, the front portion of the vehicle is downsized.

As seen from the vehicle front view, the entire left cornering light may be disposed between a left edge and a right edge of the front wheel in the vehicle width direction. As seen from the vehicle front view, the entire right cornering light may be disposed between the left edge and the right edge of the front wheel in the vehicle width direction. In this case, the left and right cornering lights are disposed more compactly in the vehicle width direction. As a result, the front portion of the vehicle is downsized.

The light unit may further include a light cover. The light cover may be disposed in front of the left cornering light and the right cornering light and have translucency. The light cover may include a front cover surface exposed from the front cover to the outside of the scooter type vehicle. The entire front cover surface may be disposed between the outer edge of the left suspension and the outer edge of the right suspension in the vehicle width direction. In this case, the entire front cover surface is compact in the vehicle width direction. As a result, the front portion of the vehicle is downsized.

The entire front cover surface may be disposed between the inner edge of the left suspension and the inner edge of the right suspension in the vehicle width direction. In this case, the entire front cover surface is compact in the vehicle width direction. As a result, the front portion of the vehicle is downsized.

The entire front cover surface may be disposed between the left edge and the right edge of the front wheel in the vehicle width direction. In this case, the entire front cover surface is compact in the vehicle width direction. As a result, the front portion of the vehicle is downsized.

The left cornering light may include a left light source. The right cornering light may include a right light source. The light unit may include a common substrate on which the left and right light sources are mounted. In this case, in the light unit, the left light source and the right light source are mounted on the common substrate. As a result, the size of the light unit is reduced.

The light unit may further include a headlight. The left cornering light and the right cornering light may be disposed below the headlight. In this case, the left and right cornering lights are disposed at lower positions.

The light unit may further include a low-beam first headlight and a high-beam second headlight. The left cornering light and the right cornering light may be disposed below the first headlight. In this case, the left and right cornering lights are disposed at lower positions.

The first headlight may include a first light source. The second headlight may include a second light source. The second light source may be disposed below the first light source. The light unit may include a common substrate on which the left light source, the right light source, and the second light source are mounted. In this case, the left and right cornering lights are disposed at lower positions. Also, the left light source, the right light source, and the second light source are mounted on the common substrate. As a result, the size of the light unit is reduced.

The light unit may be disposed at a center of the front cover in the vehicle width direction and may overlap a center line of the front cover that extends in the vertical direction as seen from the vehicle front view. In this case, the light unit is disposed compactly in the center of the front cover.

### BRIEF DESCRIPTION OF THE DRAWINGS

FIG. 1 is a side view of a scooter type vehicle according to an embodiment.
FIG. 2 is a front view of the scooter type vehicle.
FIG. 3 is a perspective view of the scooter type vehicle.
FIG. 4 is an enlarged side view of the scooter type vehicle.
FIG. 5 is an enlarged top view of the scooter type vehicle.
FIG. 6 is an enlarged front view of the scooter type vehicle.
FIG. 7 is an exploded perspective view of a light unit of the scooter type vehicle.
FIG. 8 is a longitudinal sectional view of the light unit.
FIG. 9 is a front view of the light unit with the light cover omitted.
FIG. 10 is a diagram showing a relationship between a lean angle of the scooter type vehicle and a light quantity of a cornering light.
FIG. 11 is a diagram showing an example of control of the light quantity of the cornering light when the scooter type vehicle turns.
FIG. 12 is a front view of the scooter type vehicle showing the cornering light according to the present embodiment and a cornering light according to a comparative example.

### DETAILED DESCRIPTION

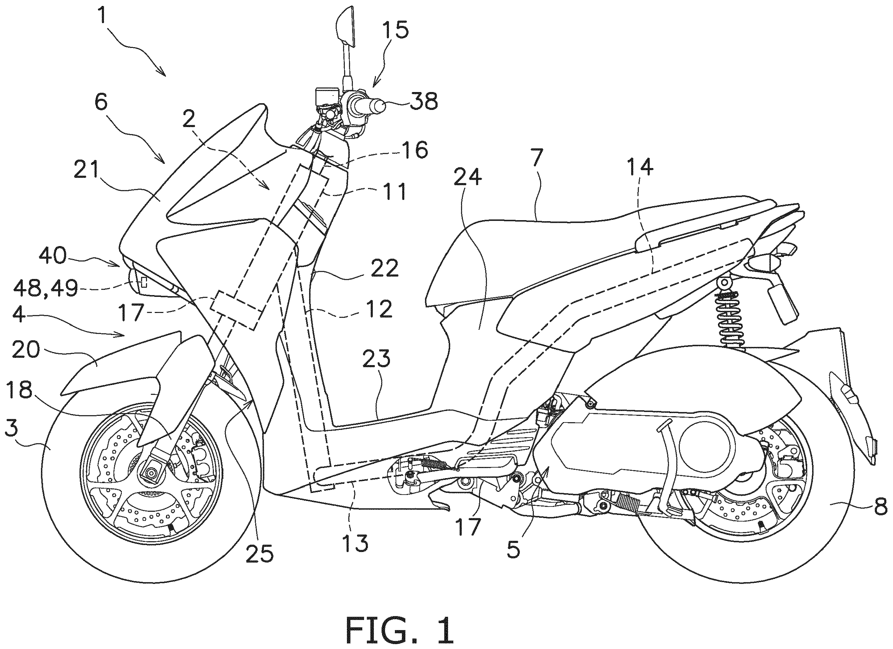

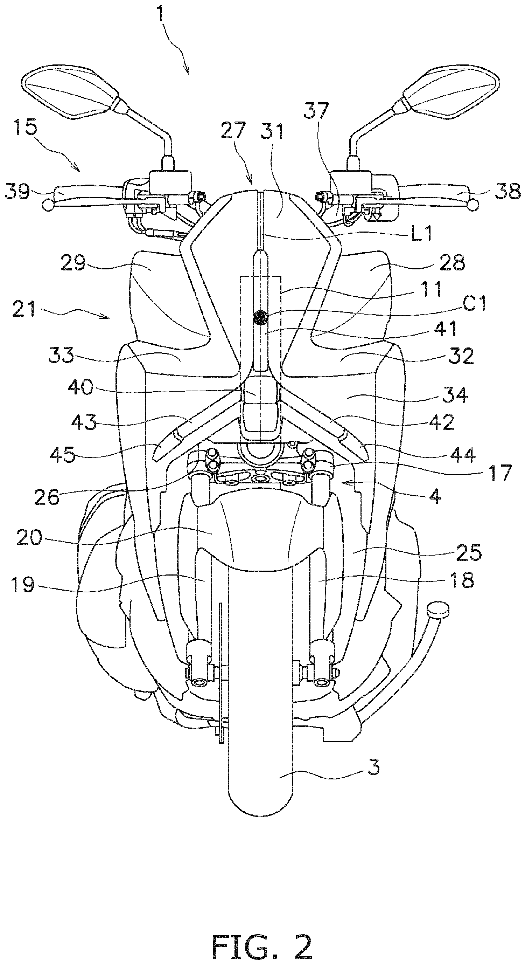

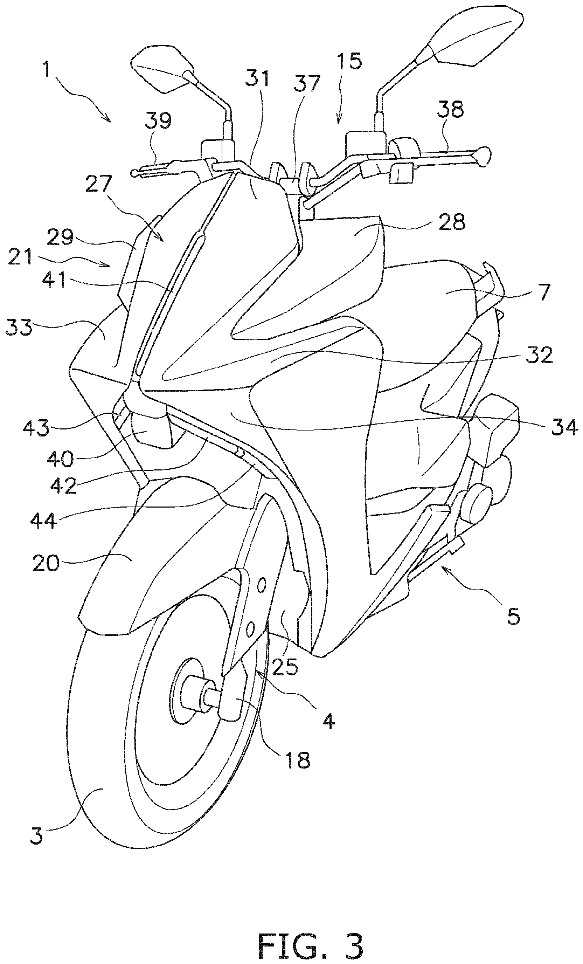

A scooter type vehicle according to an embodiment will be described below with reference to the drawings. FIG. 1 is a side view of a scooter type vehicle 1 according to an embodiment. FIG. 2 is a front view of the scooter type vehicle 1. FIG. 3 is a perspective view of the scooter type vehicle 1. As shown in FIGS. 1 to 3, the scooter type vehicle 1 includes a vehicle body frame 2, a steering device 4, a power unit 5, a body cover 6, and a seat 7. In the following description, front/rear, left/right, and up/down directions refer to front/rear, left/right, and up/down directions as seen from a rider on the seat 7.

As shown in FIG. 1, the vehicle body frame 2 includes a head pipe 11, a down frame 12, a lower frame 13, and a seat frame 14. The head pipe 11 extends obliquely forward and downward. The down frame 12 extends downward from the head pipe 11. The lower frame 13 extends rearward from the down frame 12. The seat frame 14 is disposed below the seat 7. The seat frame 14 extends obliquely rearward and upward. The seat 7 is disposed behind the head pipe 11.

The steering device 4 is rotatably supported by the head pipe 11. The steering device 4 includes a handle member 15, a steering shaft 16, a bracket 17, a left suspension 18, a right suspension 19, and a front wheel 3. The handle member 15 is operable left and right by a rider. The handle member 15 includes a handlebar 37, a left grip 38, and a right grip 39. The handlebar 37 is connected to the steering shaft 16. The left grip 38 is attached to a left end of the handlebar 37. The right grip 39 is attached to a right end of the handlebar 37. The steering shaft 16 is inserted into the head pipe 11 and rotatably supported by the head pipe 11.

The bracket 17 is connected to the steering shaft 16. The bracket 17 is disposed below the head pipe 11. The bracket 17 is connected to the steering shaft 16 below the head pipe 11. The bracket 17 extends in a vehicle width direction of the scooter type vehicle 1.

The left suspension 18 and the right suspension 19 are connected to the bracket 17 respectively. An upper end of the left suspension 18 and an upper end of the right suspension 19 are connected to the bracket 17 respectively. The left suspension 18 and the right suspension 19 each extend downward from bracket 17. The front wheel 3 is rotatably supported by the left suspension 18 and the right suspension 19. A front fender 20 is disposed above the front wheel 3.

The body cover 6 includes a front cover 21, a leg shield 22, a footboard 23, and a rear cover 24. The front cover 21 is disposed in front of the head pipe 11. The front cover 21 is made of an opaque material. The front cover 21 covers the head pipe 11 from the left, right and front sides of the head pipe 11. The head pipe 11 is disposed inside the front cover 21.

A tire house 25 is disposed below the front cover 21. The tire house 25 has a shape recessed rearward. The front wheel 3 is disposed in the tire house 25. The front cover 21 includes a lower edge 26 disposed along the tire house 25.

As shown in FIG. 1, the leg shield 22 is disposed behind the front cover 21. The footboard 23 is disposed in front of and below the seat 7. The footboard 23 has a flat shape. The footboard 23 may have a center tunnel portion projecting upward at the center in the left-right direction. The rear cover 24 is disposed below the seat 7.

The power unit 5 is disposed below the seat 7. The power unit 5 is supported by the vehicle body frame 2. The power unit 5 includes, for example, an engine and a transmission. The power unit 5 may include an electric motor. The rear wheel 8 is supported by the vehicle body frame 2 via the power unit 5. Alternatively, the rear wheel 8 may be supported by the vehicle body frame 2 via a swing arm. The rear wheel 8 is rotated by a traction force from the power unit 5.

As shown in FIG. 2, the front cover 21 overlaps the head pipe 11 as seen from the vehicle front view. An upper end of the front cover 21 is disposed below the upper edges of the left and right grips 38 and 39 as seen from the vehicle front view. The front cover 21 includes a main cover 27, a left cover 28, and a right cover 29. The main cover 27 overlaps the head pipe 11 as seen from the vehicle front view. The left cover 28 and right cover 29 are provided separately from the main cover 27. The left cover 28 is disposed leftward of the head pipe 11 as seen from the vehicle front view. The right cover 29 is disposed rightward of the head pipe 11 as seen from the vehicle front view.

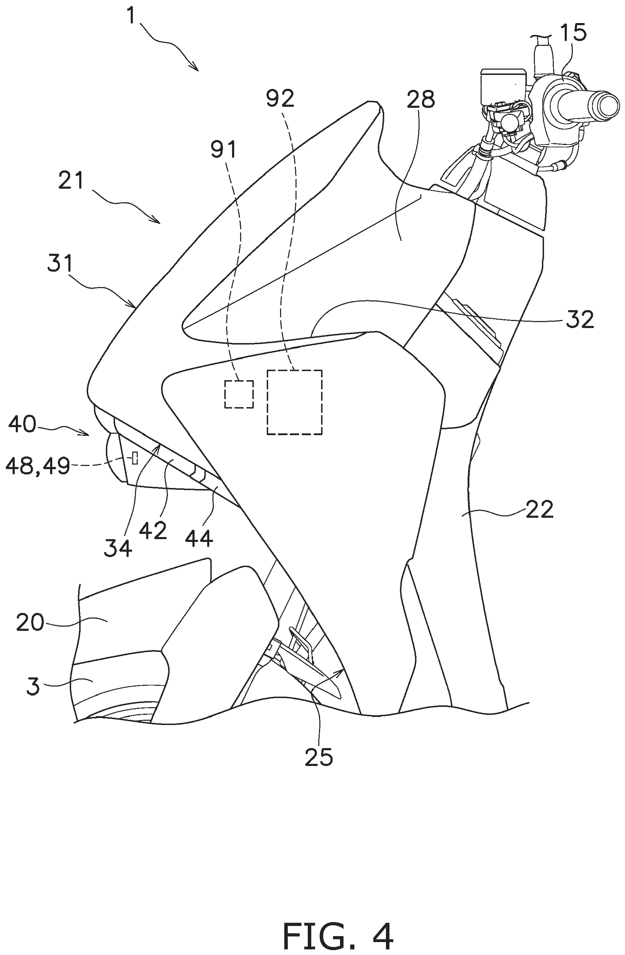

The main cover 27 includes a first inclined surface 31, a first shoulder portion 32, a second shoulder portion 33, and a second inclined surface 34. The first inclined surface 31 is disposed at the center of the scooter type vehicle 1 in the left-right direction as seen from the vehicle front view. The first inclined surface 31 overlaps the head pipe 11 as seen from the vehicle front view. The first inclined surface 31 overlaps the handle member 15 as seen from the vehicle front view. FIG. 4 is an enlarged side view of the scooter type vehicle 1. As shown in FIG. 4, the first inclined surface 31 is inclined upward and rearward as seen from the vehicle side view.

The first shoulder portion 32 and the second shoulder portion 33 are connected to a lower portion of the first inclined surface 31. The first shoulder portion 32 extends leftward from the first inclined surface 31 as seen from the vehicle front view. The second shoulder portion 33 extends rightward from the first inclined surface 31 as seen from the vehicle front view. The second inclined surface 34 is disposed below the first inclined surface 31 as seen from the vehicle side view. The second inclined surface 34 is inclined downward and rearward as seen from the vehicle side view.

The left cover 28 is disposed leftward of the first inclined surface 31 as seen from the vehicle front view. The left cover 28 is disposed above the first shoulder portion 32 as seen from the vehicle front view. The left cover 28 is disposed below the handle member 15 as seen from the vehicle front view. The right cover 29 is disposed rightward of the first inclined surface 31 as seen from the vehicle front view. The right cover 29 is disposed above the second shoulder portion 33 as seen from the vehicle front view. The right cover 29 is disposed below the handle member 15 as seen from the vehicle front view.

The scooter type vehicle 1 includes a light unit 40, position lamps 41-43, and flashers 44 and 45. The light unit 40, the position lamps 41 to 43, and the flashers 44 and 45 are provided on the front cover 21. As shown in FIG. 2, the light unit 40 is disposed at a center of the front cover 21 in the vehicle width direction as seen from the vehicle front view. The light unit 40 overlaps the center line L1 of the front cover 21 extending in the vertical direction as seen from the vehicle front view. The entire light unit 40 is disposed below the center C1 of the front cover 21 in the vehicle vertical direction as seen from the vehicle front view.

The light unit 40 is disposed below the first inclined surface 31. The light unit 40 is disposed on the second inclined surface 34. As shown in FIG. 2, the light unit 40 protrudes downward from a lower edge 26 of the front cover 21 as seen from the vehicle front view. As shown in FIG. 4, the light unit 40 protrudes downward from the second inclined surface 34 as seen from the vehicle side view.

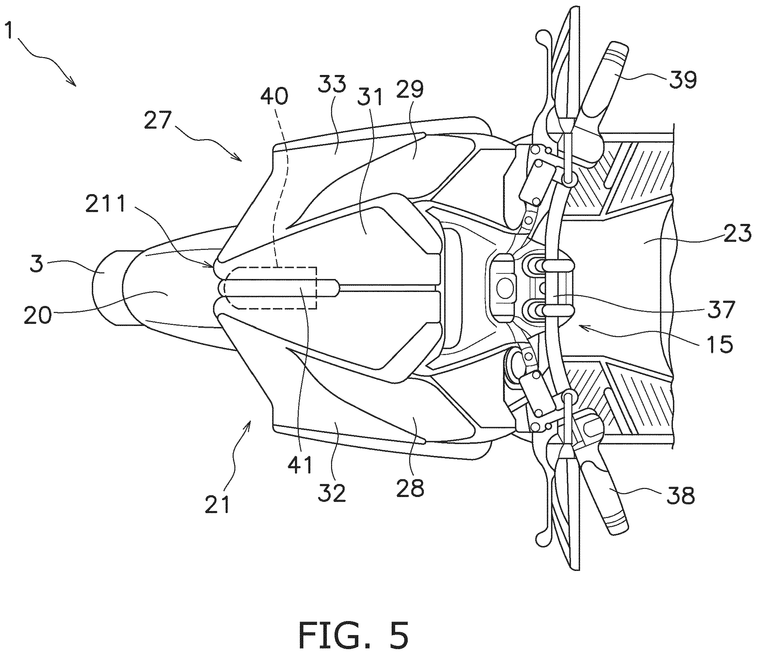

FIG. 5 is an enlarged top view of the scooter type vehicle 1. As shown in FIG. 5, the entire light unit 40 is disposed behind a front end 211 of the front cover 21 as seen from the vehicle top view. The entire light unit 40 overlaps the first inclined surface 31 as seen from the vehicle top view. As seen from the vehicle top view, the entire light unit 40 is hidden below the first inclined surface 31 and cannot be visually recognized.

As shown in FIG. 2, the position lamps 41-43 include a first position lamp 41, a second position lamp 42, and a third position lamp 43. The first position lamp 41 is disposed on the first inclined surface 31. The first position lamp 41 is disposed above the light unit 40 as seen from the vehicle front view. The first position lamp 41 extends upward from the light unit 40 as seen from the vehicle front view.

The second position lamp 42 and the third position lamp 43 are disposed on the second inclined surface 34. The second position lamp 42 is disposed leftward of the light unit 40 as seen from the vehicle front view. As seen from the vehicle front view, the second position lamp 42 extends downward and leftward from the light unit 40. The third position lamp 43 is disposed rightward of the light unit 40 as seen from the vehicle front view. As seen from the vehicle front view, the third position lamp 43 extends downward and rightward from the light unit 40.

The flashers 44 and 45 include a left flasher 44 and a right flasher 45. The left flasher 44 is disposed below and leftward of the second position lamp 42 as seen from the vehicle front view. The left flasher 44 is disposed linearly with the second position lamp 42 in the longitudinal direction of the second position lamp 42 as seen from the vehicle front view. The right flasher 45 is disposed below and rightward of the third position lamp 43 as seen from the vehicle front view. The right flasher 45 is disposed linearly with the third position lamp 43 in the longitudinal direction of the third position lamp 43 as seen from the vehicle front view.

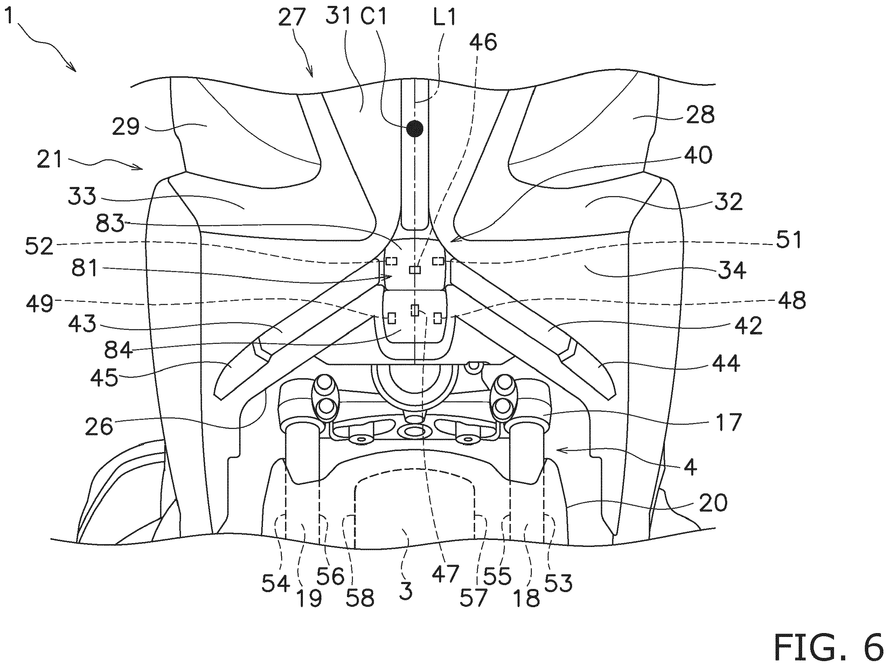

FIG. 6 is an enlarged front view of the scooter type vehicle 1. As shown in FIG. 6, the light unit 40 includes headlights 46 and 47, a left cornering light 48, and a right cornering light 49. The headlights 46 and 47 illuminate the front of the scooter type vehicle 1. The left cornering light 48 illuminates the ground on the left front side of the scooter type vehicle 1 when the scooter type vehicle 1 turns left. The right cornering light 49 illuminates the ground on the right front side of the scooter type vehicle 1 when the scooter type vehicle 1 turns to the right. The irradiation direction of the left cornering light 48 is fixed to the front left of the vehicle. The irradiation direction of the right cornering light 49 is fixed to the front right of the vehicle.

The headlights 46 and 47 include a first headlight 46 and a second headlight 47. The first headlight 46 is a low beam. The first headlight 46 is disposed at the center of the front cover 21 in the vehicle width direction as seen from the vehicle front view. The first headlight 46 is disposed on the center line L1 of the front cover 21 as seen from the vehicle front view.

The second headlight 47 is a high beam and illuminates an area higher than that of the first headlight 46. The second headlight 47 is disposed below the first headlight 46. The second headlight 47 is disposed at the center of the front cover 21 in the vehicle width direction as seen from the vehicle front view. The second headlight 47 is disposed on the center line L1 of the front cover 21 as seen from the vehicle front view.

The headlights 46 and 47 include a first sub-light 51 and a second sub-light 52. The first sub-light 51 is disposed leftward of the first headlight 46. The second sub-light 52 is disposed rightward of the first headlight 46. The first sub-light 51 and the second sub-light 52 emit light with a color temperature lower than that of the first headlight 46 and the second headlight 47. For example, the first sub-light 51 and the second sub-light 52 are lit when a sub-light switch (not shown) is turned on.

The entirety of the left cornering light 48 and the right cornering light 49 are disposed below the center C1 of the front cover 21 in the vehicle vertical direction as seen from the vehicle front view. The left cornering light 48 and the right cornering light 49 are disposed below the first headlight 46. The left cornering light 48 and the right cornering light 49 are disposed below the first sub-light 51 and the second sub-light 52. The left cornering light 48 is disposed leftward of the second headlight 47. The right cornering light 49 is disposed rightward of the second headlight 47.

The entire left cornering light 48 and right cornering light 49 are disposed between the second position lamp 42 and the third position lamp 43 in the vehicle width direction as seen from the vehicle front view. The entire left cornering light 48 and right cornering light 49 are disposed between the left flasher 44 and the right flasher 45 in the vehicle width direction as seen from the vehicle front view. The entire left cornering light 48 and right cornering light 49 are disposed between the left suspension 18 and the right suspension 19 in the vehicle width direction as seen from the vehicle front view.

Specifically, as seen from the vehicle front view, the entire left cornering light 48 is disposed between an outer edge 53 of the left suspension 18 and an outer edge 54 of the right suspension 19 in the vehicle width direction. As seen from the vehicle front view, the entire right cornering light 49 is disposed between the outer edge 53 of the left suspension 18 and the outer edge 54 of the right suspension 19 in the vehicle width direction. As seen from the vehicle front view, the entire left cornering light 48 is disposed between an inner edge 55 of the left suspension 18 and an inner edge 56 of the right suspension 19 in the vehicle width direction. As seen from the vehicle front view, the entire right cornering light 49 is disposed between the inner edge 55 of the left suspension 18 and the inner edge 56 of the right suspension 19 in the vehicle width direction.

The left cornering light 48 and the right cornering light 49 are disposed directly above the front wheel 3 as seen from the vehicle front view. Specifically, as seen from the vehicle front view, the entire left cornering light 48 is disposed between a left edge 57 and a right edge 58 of the front wheel 3 in the vehicle width direction. As seen from the vehicle front view, the entire right cornering light 49 is disposed between the left edge 57 and the right edge 58 of the front wheel 3 in the vehicle width direction.

As shown in FIG. 1, the left cornering light 48 and the right cornering light 49 are disposed below an upper surface of the seat 7 as seen from the vehicle side view. As shown in FIG. 4, the left cornering light 48 and the right cornering light 49 are disposed below the first inclined surface 31 as seen from the vehicle side view. The left cornering light 48 and the right cornering light 49 are disposed below the second inclined surface 34 as seen from the vehicle side view.

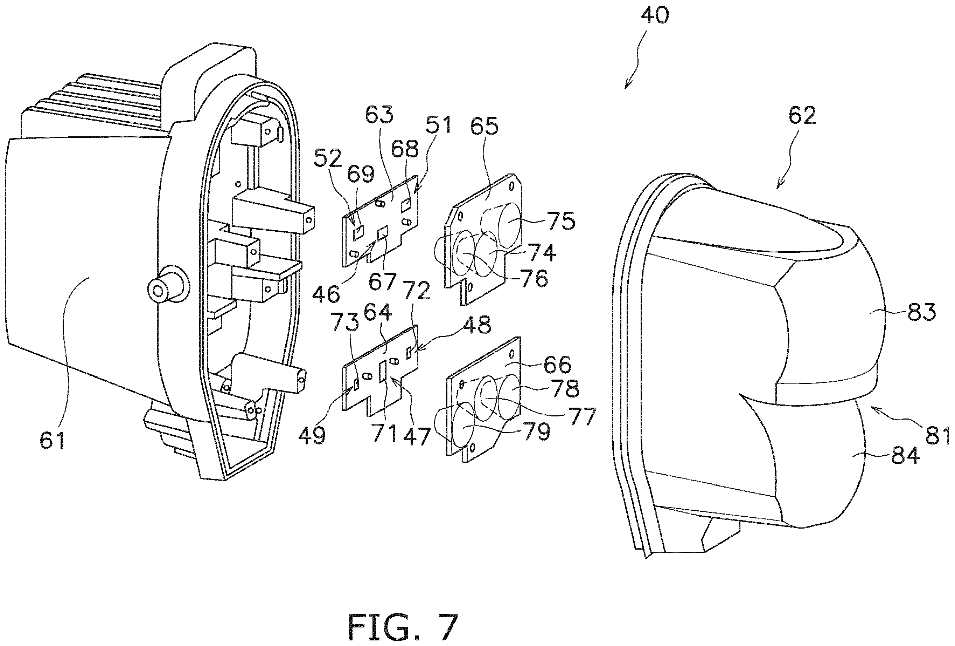

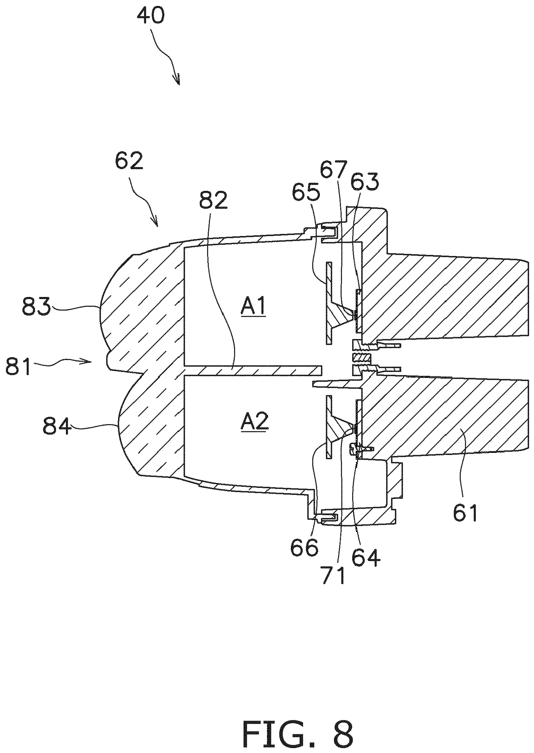

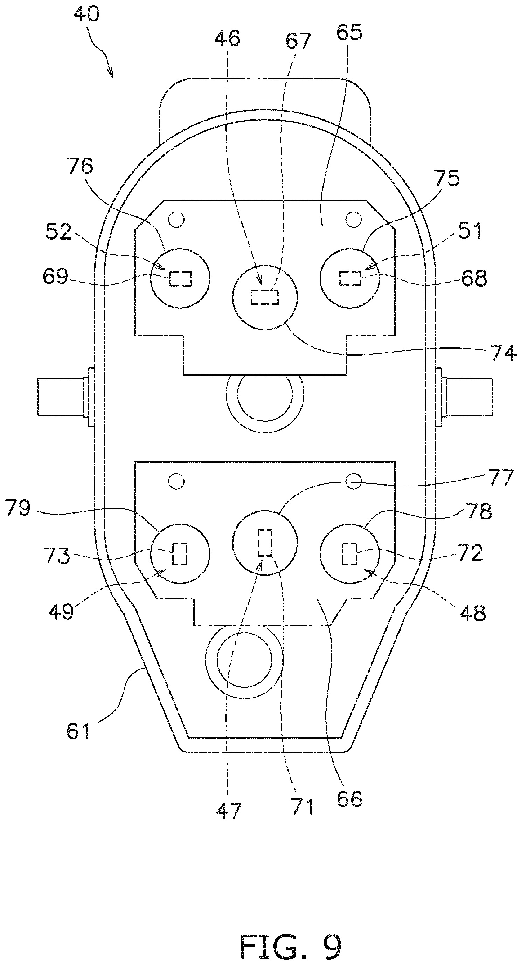

FIG. 7 is an exploded perspective view of the light unit 40. As shown in FIG. 7, the light unit 40 includes a housing 61, a light cover 62, a first substrate 63, a second substrate 64, a first lens member 65, and a second lens member 66. FIG. 8 is a longitudinal sectional view of the light unit 40. FIG. 9 is a front view of the light unit 40 with the light cover 62 omitted.

The first substrate 63 is attached to the housing 61. The first headlight 46 includes a first light source 67. The first light source 67 is, for example, an LED. The first light source 67 is mounted on the first substrate 63. The first sub-light 51 includes a first sub-light source 68. The second sub-light 52 includes a second sub-light source 69. The first sub-light source 68 and the second sub-light source 69 are LEDs, for example. The first sub-light source 68 and the second sub-light source 69 are mounted on the first substrate 63. The first substrate 63 is integrally formed. The first light source 67, the first sub-light source 68, and the second sub-light source 69 are mounted on the common first substrate 63 that is integrally formed.

The second substrate 64 is attached to the housing 61. The second substrate 64 is provided separately from the first substrate 63. The second substrate 64 is disposed downwardly away from the first substrate 63. The second headlight 47 includes a second light source 71. The second light source 71 is, for example, an LED. The second light source 71 is mounted on the second substrate 64. The second light source 71 is disposed below the first light source 67.

The left cornering light 48 includes a left light source 72. The left light source 72 is, for example, an LED. The left light source 72 is disposed leftward of the second light source 71. The left light source 72 is mounted on the second substrate 64. The right cornering light 49 includes a right light source 73. The right light source 73 is, for example, an LED. The right light source 73 is disposed rightward of the second light source 71. The right light source 73 is mounted on the second substrate 64. The second substrate 64 is integrally formed. The second light source 71, the left light source 72, and the right light source 73 are mounted on the common second substrate 64 integrally formed.

The first lens member 65 is disposed in front of the first substrate 63. The first lens member 65 includes a first lens 74, a first sub-lens 75, and a second sub-lens 76. The first lens 74, the first sub-lens 75, and the second sub-lens 76 are each collimating lenses. The first lens 74 is disposed in front of the first light source 67. The first sub-lens 75 is disposed in front of the first sub-light source 68. The second sub-lens 76 is disposed in front of the second sub-light source 69. The first lens 74, the first sub-lens 75, and the second sub-lens 76 adjust the irradiation range from the first light source 67, the first sub-light source 68, and the second sub-light source 69, respectively.

The second lens member 66 is disposed in front of the second substrate 64. The second lens member 66 includes a second lens 77, a left lens 78, and a right lens 79. The second lens 77, the left lens 78, and the right lens 79 are collimating lenses, respectively. The second lens 77 is disposed in front of the second light source 71. The left lens 78 is disposed in front of the left light source 72. The right lens 79 is disposed in front of the right light source 73. The second lens 77, the left lens 78, and the right lens 79 adjust the irradiation range from the second light source 71, the left light source 72, and the right light source 73, respectively.

The light cover 62 is attached to the housing 61. The light cover 62 is made of a translucent material such as resin. The light cover 62 is disposed in front of the first substrate 63 and the second substrate 64. That is, the light cover 62 is disposed in front of the first light source 67 and the second light source 71. The light cover 62 transmits light from the first light source 67 and the second light source 71. The light cover 62 is disposed in front of the left light source 72 and the right light source 73. The light cover 62 transmits light from the left light source 72 and the right light source 73. The light cover 62 is disposed in front of the first sub-light source 68 and the second sub-light source 69. The light cover 62 transmits light from the first sub-light source 68 and the second sub-light source 69.

The light cover 62 includes a front cover surface 81 exposed from the front cover 21 to the outside of the scooter type vehicle 1. As shown in FIG. 6, the entire front cover surface 81 is disposed between the outer edge 53 of the left suspension 18 and the outer edge 54 of the right suspension 19 in the vehicle width direction. The entire front cover surface 81 is disposed between the inner edge 55 of the left suspension 18 and the inner edge 56 of the right suspension 19 in the vehicle width direction. The entire front cover surface 81 is disposed between the left edge 57 and the right edge 58 of the front wheel 3 in the vehicle width direction.

As shown in FIG. 8, the light unit 40 includes a partition plate 82. The partition plate 82 vertically partitions the interior of the housing 61 and the light cover 62. The partition plate 82 is connected to the light cover 62. Alternatively, the partition plate 82 may be provided separately from the light cover 62. The partition plate 82 partitions the inside of the housing 61 and the light cover 62 into a first space A1 and a second space A2. The first substrate 63 and the first lens member 65 are disposed in the first space A1. The second space A2 is located below the first space A1. The second substrate 64 and the second lens member 66 are disposed in the second space A2.

The front cover surface 81 includes an upper front surface 83 and a lower front surface 84. The upper front surface 83 is a portion of the front cover surface 81 above the partition plate 82. The lower front surface 84 is a portion of the front cover surface 81 below the partition plate 82. As shown in FIG. 6, the first headlight 46 overlaps the upper front surface 83 as seen from the vehicle front view. The first sub-light 51 and the second sub-light 52 overlap the upper front surface 83 as seen from the vehicle front view. The second headlight 47 overlaps the lower front surface 84 as seen from the vehicle front view. The left cornering light 48 and the right cornering light 49 overlap the lower front surface 84 as seen from the vehicle front view.

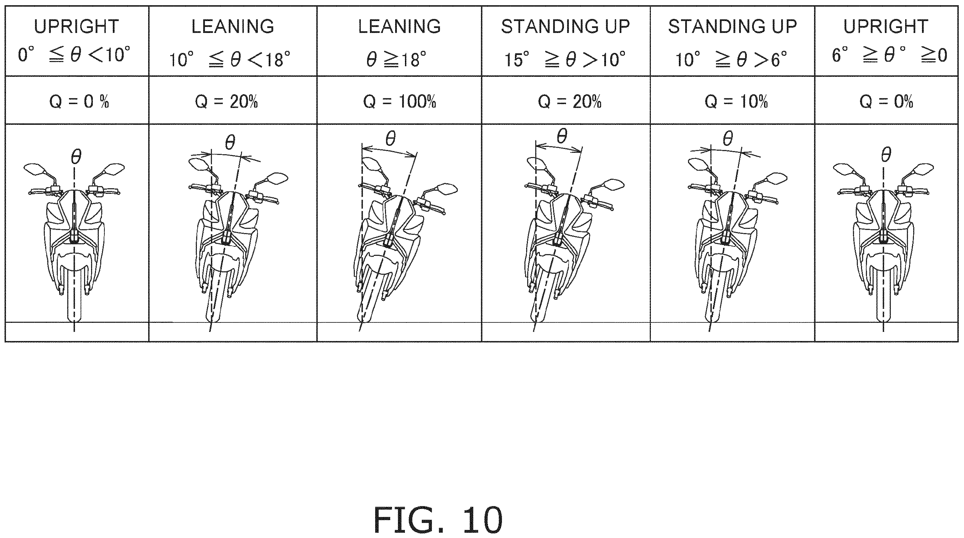

Next, control of the light quantities of the left cornering light 48 and the right cornering light 49 will be described. As shown in FIG. 4, the scooter type vehicle 1 includes a sensor 91 and a controller 92. The sensor 91 detects a lean angle θ of the scooter type vehicle 1. As shown in FIG. 10, the lean angle θ is an inclination angle of the scooter type vehicle 1 with respect to the vertical direction. The sensor 91 is, for example, an IMU (Inertial Measurement Unit).

The controller 92 controls the light quantities of the left cornering light 48 and the right cornering light 49. The controller 92 is communicably connected to the sensor 91. The controller 92 acquires the lean angle θ of the scooter type vehicle 1 detected by the sensor 91. When the scooter type vehicle 1 turns to the left, the controller 92 controls the light quantity of the left cornering light 48 in accordance with the leftward lean angle θ of the scooter type vehicle 1. When the scooter type vehicle 1 turns to the right, the controller 92 controls the light quantity of the right cornering light 49 according to the lean angle θ of the scooter type vehicle 1 to the right.

FIG. 10 is a diagram showing the relationship between the lean angle θ of the scooter type vehicle 1 and the light quantity Q of the left cornering light 48 when the scooter type vehicle 1 turns left. In FIG. 10, the light quantity Q of the left cornering light 48 is shown as a percentage when the maximum value of the light quantity Q of the left cornering light 48 is 100%. As shown in FIG. 10, when the scooter type vehicle 1 stands upright, the controller 92 sets the light quantity Q of the left cornering light 48 to 0%. Specifically, when the lean angle θ is equal to or greater than 0 degrees and less than 10 degrees, the controller 92 sets the light quantity Q of the left cornering light 48 to 0%, that is, off When the scooter type vehicle 1 turns left, the controller 92 turns off the right cornering light 49.

The controller 92 sets the light quantity Q of the left cornering light 48 to 20% when the lean angle θ is 10 degrees or more and less than 18 degrees while the scooter type vehicle 1 is leaning. The controller 92 determines that the scooter type vehicle 1 is leaning when the lean angle θ is increasing. The controller 92 sets the light quantity Q of the left cornering light 48 to 100% when the lean angle θ is equal to or greater than 18 degrees while the scooter type vehicle 1 is leaning.

The controller 92 sets the light quantity Q of the left cornering light 48 to 20% when the lean angle θ is 15 degrees or less and greater than 10 degrees while the scooter type vehicle 1 is standing up. The controller 92 determines that the scooter type vehicle 1 is standing up when the lean angle θ is decreasing. The controller 92 sets the light quantity Q of the left cornering light 48 to 10% when the lean angle θ is 10 degrees or less and greater than 6 degrees while the scooter type vehicle 1 is standing up. The controller 92 sets the light quantity Q of the left cornering light 48 to 0% when the lean angle θ is 6 degrees or less and 0 degrees or more while the scooter type vehicle 1 is standing up. It should be noted that the lean angle threshold (10 degrees) from the upright to the leaning differs from the lean angle threshold (6 degrees) from the standing to the upright. As a result, erroneous determination by the controller 92 is suppressed.

The control of the light quantity Q of the left cornering light 48 when the scooter type vehicle 1 turns to the left has been described above, but the control of the light quantity Q of the right cornering light 49 when the scooter type vehicle 1 turns to the right is the same as described above.

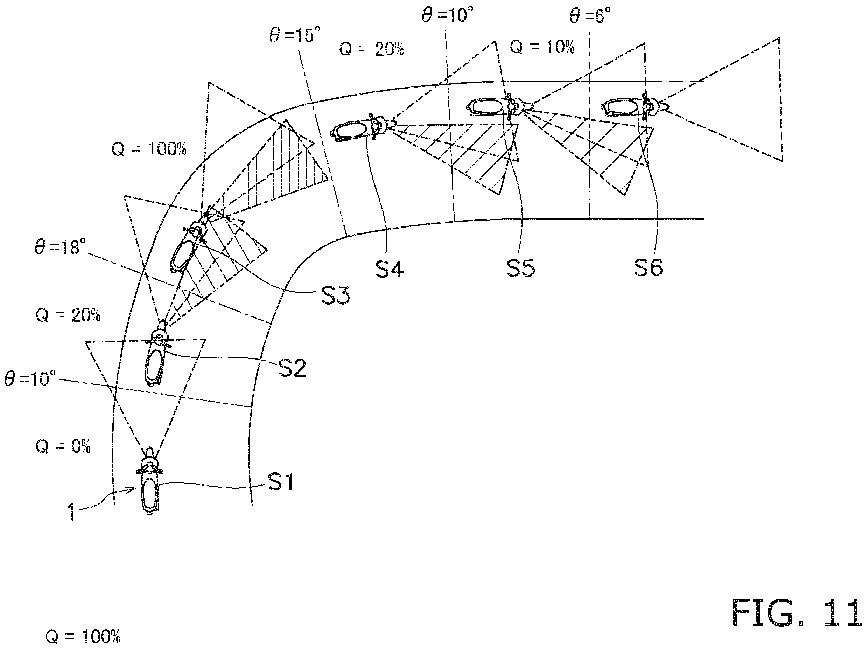

FIG. 11 is a diagram showing an example of control of the light quantity Q of the right cornering light 49 when the scooter type vehicle 1 turns right. In FIG. 11, the irradiation range of the first headlight 46 is indicated by a dashed line. Also, the irradiation range of the right cornering light 49 is indicated by a chain double-dashed line.

As shown in FIG. 11, in state S1 before the scooter type vehicle 1 enters a corner, the scooter type vehicle 1 stands upright and the lean angle θ is smaller than 10 degrees. Therefore, the light quantity Q of the right cornering light 49 is 0%. When the scooter type vehicle 1 starts entering the corner, the scooter type vehicle 1 is leaning to the right, and the lean angle θ of the scooter type vehicle 1 to the right increases. In state S2, when the lean angle θ becomes 10 degrees or more, the controller 92 sets the light quantity Q of the right cornering light 49 to 20%. As a result, the right cornering light 49 is turned on, and the right front side of the scooter type vehicle 1 is illuminated by the right cornering light 49 with a light quantity Q of 20%.

When the scooter type vehicle 1 is further leaning to the right side and the lean angle θ becomes 18 degrees or more in state S3, the controller 92 sets the light quantity Q of the right cornering light 49 to 100%. As a result, the light quantity Q to the right front of the scooter type vehicle 1 is increased to 100%.

When the scooter type vehicle 1 enters the final stage of the corner and the scooter type vehicle 1 starts to stand up, the lean angle θ of the scooter type vehicle 1 to the right decreases. Then, in state S4, when the lean angle θ becomes 15 degrees or less, the controller 92 sets the light quantity Q of the right cornering light 49 to 20%. As a result, the light quantity Q to the right front of the scooter type vehicle 1 is reduced to 20%.

When the scooter type vehicle 1 is further standing up and the lean angle θ becomes 10 degrees or less in state S5, the controller 92 sets the light quantity Q of the right cornering light 49 to 10%. As a result, the light quantity Q to the right front of the scooter type vehicle 1 is further weakened.

Then, in state S6, when the scooter type vehicle 1 exits the corner and returns to an upright position and the lean angle θ becomes 6 degrees or less, the controller 92 sets the light quantity Q of the right cornering light 49 to 0%. As a result, the right cornering light 49 is turned off.

As described above, the controller 92 controls the light quantity Q of the left cornering light 48 and the right cornering light 49 stepwise according to the lean angle θ. Further, the controller 92 controls the light quantity Q of the left cornering light 48 and the right cornering light 49 in more stages during the standing up of the scooter type vehicle 1 than during the leaning.

In the scooter type vehicle 1 according to the present embodiment described above, the left and right cornering lights 48 and 49 are entirely disposed at low positions on the front cover 21. As a result, changes in the positions of the left and right cornering lights 48 and 49 according to the lean angle θ are reduced, thereby suppressing the change in the illumination range. As seen from the vehicle front view, the left and right cornering lights 48 and 49 are entirely disposed between the outer edge 53 of the left suspension 18 and the outer edge 54 of the right suspension 19 in the vehicle width direction. Therefore, the left and right cornering lights 48 and 49 are compactly disposed in the center of the front cover 21. This provides a large distance between the ground and the left and right cornering lights 48 and 49 when the vehicle is leaned. Therefore, even if the left and right cornering lights 48 and 49 are disposed at low positions, the change in the illumination range are suppressed. The left and right cornering lights 48 and 49 are compactly disposed at the center of the front cover 21. Therefore, the front portion of the scooter type vehicle 1 is downsized.

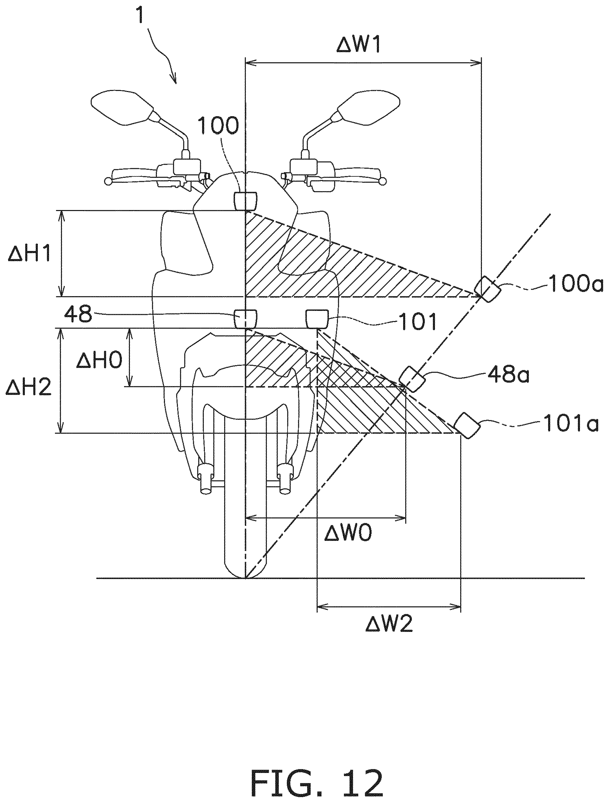

FIG. 12 is a front view of the scooter type vehicle 1 showing the cornering light 48 according to the present embodiment and cornering lights 100 and 101 according to comparative examples 1 and 2. The cornering light 100 according to the comparative example 1 is disposed above the cornering light 48 according to the present embodiment. The cornering light 101 according to the comparative example 2 is disposed further leftward than the cornering light 48 according to the present embodiment.

12, 48a, 100a, and 101a indicate the positions of the cornering light 48 according to the present embodiment and the cornering lights 100 and 101 according to the comparative examples 1 and 2 when the scooter type vehicle 1 is leaned leftward. As shown in FIG. 12, when the scooter type vehicle 1 leans leftward, the positional change ΔH0 of the cornering light 48 in the vehicle vertical direction according to the present embodiment is smaller than the positional change ΔH1 of the cornering light 100 in the vehicle vertical direction according to the comparative example 1. Further, the positional change ΔW0 of the cornering light 48 in the vehicle width direction according to the present embodiment is smaller than the positional change ΔW1 of the cornering light 100 in the vehicle width direction according to the comparative example 1.

The positional change ΔH0 in the vehicle vertical direction of the cornering light 48 according to the present embodiment is smaller than the positional change ΔH2 in the vehicle vertical direction of the cornering light 101 according to the comparative example 2. The positional change ΔW0 of the cornering light 48 in the vehicle width direction according to the present embodiment is larger than the positional change ΔW2of the cornering light 101 in the vehicle width direction according to the comparative example 2. However, the difference between the positional change ΔW0 and the positional change ΔW2 is small.

Although one embodiment of the present invention has been described above, the present invention is not limited to the above-described embodiment, and various modifications are possible without departing from the gist of the invention.

The shape of the front cover 21 is not limited to that of the above embodiment, and may be changed. The shapes and arrangements of the first to third position lamps 41-43 are not limited to those of the above embodiment, and may be changed. The shapes or arrangements of the left flasher 44 and the right flasher 45 are not limited to those of the above embodiment, and may be changed.

The arrangement of the controller 92 and the sensor 91 is not limited to that of the embodiment described above, and may be changed. The control of the light quantity Q of the left cornering light 48 and the right cornering light 49 by the controller 92 is not limited to the above-described embodiment, and may be changed. The values of the light quantity Q of the left cornering light 48 and the right cornering light 49 are not limited to those in the above embodiment, and may be changed. The threshold value of the lean angle θ for changing the light quantity Q of the left cornering light 48 and the right cornering light 49 is not limited to that in the above embodiment, and may be changed.

The structure or arrangement of the light unit 40 is not limited to the above embodiment, and may be modified. For example, in the embodiment described above, the headlights 46 and 47, the left cornering light 48, and the right cornering light 49 are integrated as the light unit 40. However, headlights 46 and 47 may be separate from left cornering light 48 and right cornering light 49. The left cornering light 48 and the right cornering light 49 may be laterally reversed from the embodiment described above.

### REFERENCE SIGNS LIST

3: Front wheel, 4: Steering device, 7: Seat, 11: Head pipe, 15: Handle member, 16: Steering shaft, 17: Bracket, 18: Left suspension, 19: Right suspension, 21: Front cover, 31: First inclined surface, 34: Second inclined surface, 40: Light unit, 46: First headlight, 47: Second headlight, 48: Left cornering light, 49: Right cornering light, 62: Light cover, 64: Second substrate, 67: First light source, 71: Second light source, 72: Left light source, 73: Right light source, 81: Front cover surface, 92: Controller

## Claims

1. A scooter type vehicle (1) comprising:
a head pipe (11);
a steering device (4) rotatably supported by the head pipe (11);
a front cover (21) that is opaque and is disposed in front of the head pipe (11);
a light unit (40) disposed on the front cover (21), the light unit (40) including
a left cornering light (48) that illuminates a ground on a left front side of the scooter type vehicle (1) when the scooter type vehicle (1) turns left, and
a right cornering light (49) that illuminates the ground on a right front side of the scooter type vehicle (1) when the scooter type vehicle (1) turns right; and
a controller (92) configured to control light quantities of the left cornering light (48) and the right cornering light (49), wherein
the steering device (4) includes
a handle member (15) operable by a rider,
a steering shaft (16) connected to the handle member (15) and inserted into the head pipe (11),
a bracket (17) connected to the steering shaft (16) and extending in a vehicle width direction of the scooter type vehicle (1),
a left suspension (18) connected to the bracket (17) and extending downward from the bracket (17),
a right suspension (19) connected to the bracket (17) and extending downward from the bracket (17), and
a front wheel (3) rotatably supported by the left suspension (18) and the right suspension (19),
the controller (92) is configured to
control the light quantity of the left cornering light (48) according to a leftward lean angle of the scooter type vehicle (1), and
control the light quantity of the right cornering light (49) according to a rightward lean angle of the scooter type vehicle (1),
the entire left cornering light (48) and the entire right cornering light (49) are disposed below a center of the front cover (21) in a vehicle vertical direction of the scooter type vehicle (1) as seen from a vehicle front view,
the entire left cornering light (48) is disposed between an outer edge of the left suspension (18) and an outer edge of the right suspension (19) in the vehicle width direction as seen from the vehicle front view, and
the entire right cornering light (49) is disposed between the outer edge of the left suspension (18) and the outer edge of the right suspension (19) in the vehicle width direction as seen from the vehicle front view.

2. The scooter type vehicle according to claim 1, wherein
the front cover (21) includes a first inclined surface (31) inclined upward and rearward as seen from the vehicle side view, and
the left cornering light (48) and the right cornering light (49) are disposed below the first inclined surface (31) as seen in a vehicle side view.

3. The scooter type vehicle according to claim 1 or 2, wherein
the front cover (21) includes a second inclined surface (34) disposed below the first inclined surface (31) as seen from the vehicle side view,
the second inclined surface (34) is inclined downward and rearward as seen from the vehicle side view, and
the left cornering light (48) and the right cornering light (49) are disposed below the second inclined surface (34) as seen from the vehicle side view.

4. The scooter type vehicle according to any one of claims 1 to 3, further comprising
a seat (7) disposed behind the head pipe (11), wherein
the left cornering light (48) and the right cornering light (49) are disposed below an upper surface of the seat (7) as seen from the vehicle side view.

5. The scooter type vehicle according to any one of claims 1 to 4, wherein
the entire left cornering light (48) is disposed between an inner edge of the left suspension (18) and an inner edge of the right suspension (19) in the vehicle width direction as seen from the vehicle front view, and
the entire right cornering light (49) is disposed between the inner edge of the left suspension (18) and the inner edge of the right suspension (19) in the vehicle width direction as seen from the vehicle front view.

6. The scooter type vehicle according to any one of claims 1 to 5, wherein
the entire left cornering light (48) is disposed between a left edge and a right edge of the front wheel (3) in the vehicle width direction as seen from the vehicle front view, and
the entire right cornering light (49) is disposed between the left edge and the right edge of the front wheel (3) in the vehicle width direction as seen from the vehicle front view.

7. The scooter type vehicle according to any one of claims 1 to 6, wherein
the light unit (40) further includes a light cover (62) that is translucent and is disposed in front of the left cornering light (48) and the right cornering light (49),
the light cover (21) includes a front cover (81) surface exposed from the front cover (21) to an outside of the scooter type vehicle (1), and
the entire front cover surface (81) is disposed between the outer edge of the left suspension (18) and the outer edge of the right suspension (19) in the vehicle width direction.

8. The scooter type vehicle according to any one of claims 1 to 6, wherein
the light unit (40) further includes a light cover (21) that is translucent and is disposed in front of the left cornering light (48) and the right cornering light (49),
the light cover (21) includes a front cover surface (81) exposed from the front cover (21) to an outside of the scooter type vehicle (1), and
the entire front cover surface (81) is disposed between the inner edge of the left suspension (18) and the inner edge of the right suspension (19) in the vehicle width direction.

9. The scooter type vehicle according to any one of claims 1 to 6, wherein
the light unit (40) further includes a light cover (62) that is translucent and is disposed in front of the left cornering light (48) and the right cornering light (49),
the light cover (62) includes a front cover surface (81) exposed from the front cover (21) to an outside of the scooter type vehicle (1), and
the entire front cover surface (81) is disposed between the left edge and the right edge of the front wheel (3) in the vehicle width direction.

10. The scooter type vehicle according to any one of claims 1 to 9, wherein
the left cornering light (48) includes a left light source (72),
the right cornering light (49) includes a right light source (73), and
the light unit (40) includes a common substrate (64) on which the left light source (48) and the right light source (49) are mounted.

11. The scooter type vehicle according to any one of claims 1 to 10, wherein
the light unit (40) further includes a headlight (46, 47), and
the left cornering light (48) and the right cornering light are disposed below the headlight (46, 47).

12. The scooter type vehicle according to any one of claims 1 to 10, wherein
the light unit (40) further includes
a low-beam first headlight (46), and
a high-beam second headlight (47), and
the left cornering light (48) and the right cornering light (49) are disposed below the first headlight (46).

13. The scooter type vehicle according to claim 12, wherein
the first headlight (46) includes a first light source (67),
the second headlight (47) includes a second light source (71) disposed below the first light source (67),
the left cornering light (48) includes a left light source (72),
the right cornering light (49) includes a right light source (73), and
the light unit (40) includes a common substrate (64) on which the left light source (48), the right light source (49), and the second light source (71) are mounted.

14. The scooter type vehicle according to any one of claims 1 to 13, wherein
the light unit (40) is disposed at a center of the front cover (21) in the vehicle width direction, and
the light unit (40) overlaps a center line of the front cover (21) extending in the vehicle vertical direction as seen from the vehicle front view.
